# EUROPEAN PATENT APPLICATION

(11) **EP 2 052 901 A1**
(43) Date of publication of application: **29.04.2009**
(21) Application number: 08167215.6
(22) Date of filing: 22.10.2008
(51) Int. Cl.: B60K 35/00, B60K 37/02, G01D 11/28, G01D 13/18

(54) **Vehicle-mounted display apparatus**

(30) Priority: 23.10.2007 JP 2007275278
(71) Applicant: Calsonic Kansei Corporation, Saitama-shi Saitama 331-8501 (JP)
(72) Inventor: Miyashita, Hiroaki c/o CALSONIC KANSEI CORPORATION, Saitama 331-8501 (JP)
(74) Representative: Ilgart, Jean-Christophe

(57) **Abstract**

A vehicle-mounted display apparatus (1) includes an indicator dial panel (2) and a scale gauge unit (20), which protrudes from the obverse surface (2a) of the indicator dial panel (2), and which is translucent. A pair of protrusion parts including a first protrusion part (23a) and a second protrusion part (23b) are installed upon an exterior surface (21) of the scale gauge unit (20). The pair of protrusion parts (23a and 23b) comprise incline surfaces (24a, 24b, 25a, and 25b), respectively, and these incline surfaces are inclined with regard to the indicator dial panel (2), respectively.

## Description

The present invention relates to a vehicle -mounted display apparatus, such as an indicator that is mounted upon a vehicle, and more specifically, to a vehicle-mounted display apparatus comprising a scale gauge that includes a translucency property.

Conventionally, a vehicle mounted display apparatus is known that includes an indicator dial panel, and a scale gauge unit that protrudes from the indicator dial panel and that includes a translucency property; refer to Japanese Utility Model Application Laid Open No. H2-77631 for particulars of an instance thereof

The vehicle-mounted display apparatus causes the scale gauge unit thereof to be illuminated by way of a light source that is positioned beneath the indicator dial panel, thereby providing a lighted display thereof.

An upper surface of the scale gauge unit of the vehicle mounted display apparatus such as is described herein, however, is formed in a practically flat, level manner, and only a portion of the vehicle mounted display apparatus that faces a leading end of a needle is inclined with regard to the indicator dial panel.

As a consequence, when the scale gauge unit thereof is illuminated by way of the light source, the upper surface thereof is illuminated in a flat, level manner, thereby making it difficult to obtain a sense of solidity with regard to the scale gauge unit thereof.

An object of the present invention is to provide a vehicle-mounted display apparatus that is capable of fostering a sense of solidity with regard to the scale gauge unit thereof.

In order to accomplish the above object, a vehicle-mounted display apparatus according to one embodiment of the present invention includes an indicator dial panel and at least one scale gauge unit configured to be positioned so as to protrude from a surface of the indicator dial panel along an outer peripheral edge of the indicator dial panel and to have a light-transmitting property.

The scale gauge unit includes a plurality of protrusion parts formed on an incline surface configured to be inclined in an exterior direction of the indicator dial panel.

FIG. 1 is a front view of a vehicle-mounted display apparatus according to one embodiment of the present invention.

FIG. 2 is a perspective view showing a ring unit used in the vehicle-mounted display apparatus.

FIG. 3 is a sectional view taken along line A - A in FIG. 1.

FIG. 4A is an enlarged front view of a portion B in FIG. 2.

Fig. 4B is a perspective view of the portion B in FIG. 2 as seen from above with a slight incline thereof.

FIG. 4C is a perspective view of the portion B in FIG. 2 as seen from above with a further incline thereof.

Preferred embodiments of the present invention will be explained in detail hereinafter with reference to the accompanying drawings.

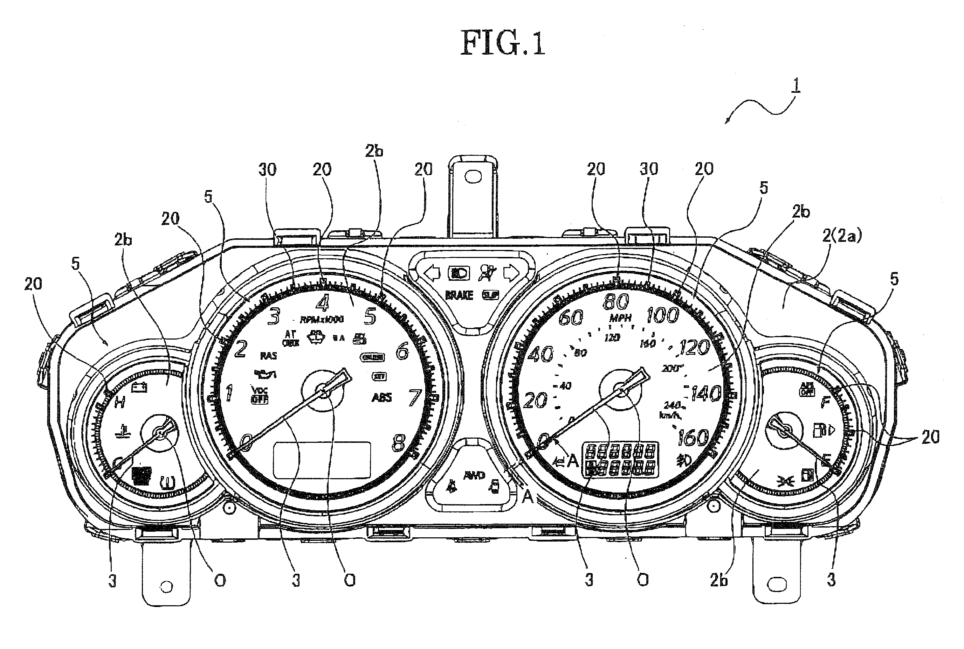

FIG. 1 illustrates a vehicle-mounted display apparatus 1 according to an embodiment of the present invention. According to the embodiment, the vehicle-mounted display apparatus 1 is implemented as a combination of meters that is installed into an instrument panel within a passenger compartment of a vehicle.

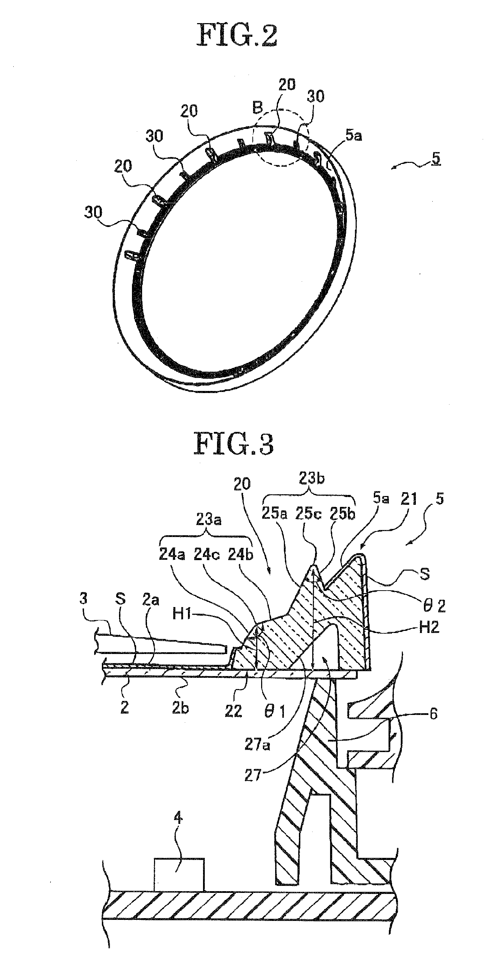

The vehicle-mounted display apparatus 1 includes an indicator dial panel 2 and a plurality of meters arranged on the indicator dial panel 2. Each of the meters includes a needle 3 that is installed upon a surface 2a. of the indicator dial panel 2, so as to rotate upon the surface 2a, as an instance thereof, a light source 4 (refer to FIG. 3 for particular), such as an LED, which is positioned upon an opposite surface of the indicator dial panel 2, and a ring unit 5 which is mounted on the surface 2a of the indicator dial panel 2.

It is to be understood that the indicator dial panel 2 is installed into an aperture end unit 6a of a housing 6, such as is depicted in FIG. 3, and the housing 6 houses both a drive device (not shown) of the needle 3, as well as the light source 4. Meanwhile, in the above embodiment, the plurality of meters are provided on the indicator dial panel 2, but at least one meter may be provided.

The indicator dial panel 2 is formed from an acrylic or other material that includes a translucency property of either transparency or semi-transparency. Applying a light-resistant coating S to an appropriate degree causes a light to penetrate only through a select portion of the indicator dial panel 2, resulting in an illuminated display of a prescribed shape.

The ring unit 5 has an annular shape and is configured to present either an circular shape or an elliptical shape that encircles a display unit 2b of the indicator dial panel 2, and that is centered upon a center of rotation O of the needle 3. An inner circumference surface 5a of the ring unit 5 is inclined so as to be banked with respect thereto. FIGs.2 and 3 illustrate the ring unit 5 with a shape of the ring thereof clarified.

In addition, a plurality of locking hooks (not shown) are formed upon a reverse surface of the inner circumference surface 5a of the ring unit 5, such that the ring unit 5 is thereby anchored upon the indicator dial panel 2. Furthermore, the ring unit 5 is also formed of a material that includes a translucency property, and is also coated to an appropriate degree with the light-resistant coating S, in a manner similar to the formation of the indicator dial panel 2.

A plurality of a scale gauge unit 20 is additionally formed at a prescribed interval along the inner circumference surface 5a of the ring unit 5, so as to protrude therefrom. In the present circumstance, given that the ring unit 5 is attached upon the indicator dial panel 2, the scale gauge unit 20 that is formed so as to protrude upon the ring unit 5 accordingly protrudes from the indicator dial panel 2.

It is to be understood that the plurality of the scale gauge unit 20 and a plurality of a small scale gauge unit 30 are formed so as to alternate therewith.

Each respective scale gauge unit 20 is formed as a single unit with the right unit 5, and projects along a normal vector from the center of rotation O of the needle 3. In addition, the scale gauge unit 20 is not coated with the light-resistant coating S, and thus, includes a translucency property.

As is illustrated in FIG. 3, the scale gauge unit 20 is formed from a plurality of protrusion parts in a tapering shape along an exterior surface 21 that is exposed upon the obverse surface 2a of the indicator dial panel 2. According to the present embodiment, the scale gauge unit 20 is formed from a pair of a first protrusion part 23a and a second protrusion part 23b.

The first protrusion part 23a includes a first incline surface 24a and a second incline surface 24b, wherein the first incline surface 24a inclines in an opposite direction to the incline of the second incline surface 24b, and vice versa, with respect to the surface 2a of the indicator dial panel 2. The first protrusion part 23a further comprises a ridge line, i.e., an apex, 24c, which forms a bridge between an upper edge unit of the first incline surface 24a and an upper edge unit of the second incline surface 24b.

In addition, the second protrusion part 23b includes a third incline surface 25a and a fourth incline surface 25b, wherein the third incline surface 25a inclines in an opposite direction to the fourth inclines surface 25b, and vice versa, with respect to the surface 2a of the indicator dial panel 2. The second protrusion part 23b further includes a ridge line, i.e., an apex, 25c, which forms a bridge between an upper edge unit of the third incline surface 25a and an upper edge unit of the fourth incline surface 25b.

It is to be understood that, with respect to the first protrusion part 23a and the second protrusion part 23b, a lower edge unit of the second incline surface 24b is contiguous with a lower edge unit of the third incline surface 25a.

In the present circumstance, an angle θ1 that is formed by the ridge line 24c of the first protrusion part 23a is greater than an angle θ2 that is formed by the ridge line 25c of the second protrusion part 23b,

In addition, a distance H1, from the obverse surface 2a of the indicator dial panel 2 to the ridge line 24c, is less than a distance H2, from the obverse surface 2a of the indicator dial panel 2 to the ridge line 25c. Put another way, the ridge line 25c protrudes further, and is thus taller, than the ridge line 24c.

In the present instance, the scale gauge unit 20 projects along the normal vector from the center of rotation O of the needle 3, and thus, the first protrusion part 23a and the second protrusion part 23b fall into a sequential line facing in a direction of an exterior of the indicator dial panel 2, Put another way, the ridge line 25c is located further in the direction of the exterior of the indicator dial panel 2 than is the ridge line 24c.

As a consequence thereof, the further in the direction of the exterior of the indicator dial panel 2 that the first protrusion part 23a and the second protrusion part 23b of the scale gauge unit 20 is located, the higher the height of each respective ridge line 24c and 25c.

Moreover, the first incline surface 24a of the first protrusion part 23a and the third incline surface 25a of the second protrusion part 23b both face toward the needle 3. Conversely, the second incline surface 24b faces almost entirely in the direction of the exterior of the indicator dial panel 2.

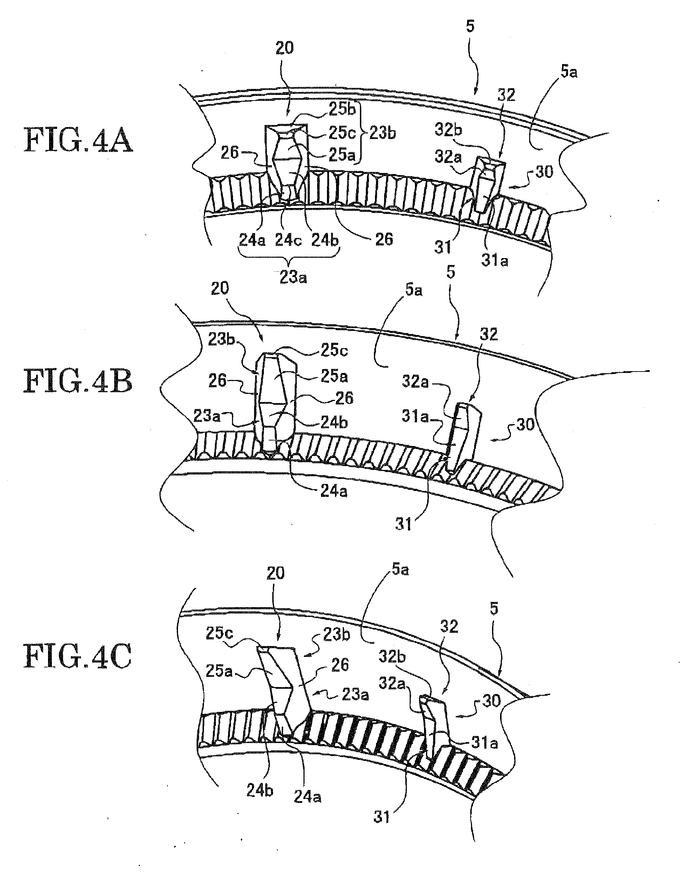

Furthermore, a pair of lateral surfaces 26, 26 are flush with the first protrusion part 23a and the second protrusion part 23b, such as is depicted in FIG. 4B.

An indentation part 27 is formed upon an interior surface 22 of the scale gauge unit 20, which faces a reverse surface of the display unit 2b of the indicator dial panel 2. The lacquering process is carried out upon an entire surface of the interior surface 22, including the indentation part 27 thereof and a peripheral region of the indentation part 27 thereof.

The indentation part 27 is configured to present a trench shape that projects in an elliptical shape throughout a region that is formed by the plurality of the scale gauge unit 20, and, in the present circumstance, comprises an incline surface 27a that faces the first protrusion part 23a and the second protrusion part 23b.

Following is a description of an effect of the vehicle-mounted display apparatus 1 according to the present invention.

The vehicle-mounted display apparatus 1 is configured to project a light from the light source 4 through the indicator dial panel 2, thereby causing the translucent component of the indicator dial panel 2 to be illuminated. It is to be understood that the translucent component herein refers to the component whereupon the light-resistant coating S has not been applied.

In addition, the light-resistant coating S has not been applied to the scale gauge unit 20, thereby causing the light to be projected through the scale gauge unit 20, thereby resulting in the scale gauge unit 20 being illuminated.

In the present circumstance, the exterior surface 21 of the scale gauge unit 20 is formed from the first protrusion part 23a, which, in turn, comprises the first incline surface 24a and the second incline surface 24b, which incline with respect to the indicator dial panel 2, and the second protrusion part 23b, which, in turn, comprises the third incline surface 25a and the fourth incline surface 25b, which incline with respect to the indicator dial panel 2.

In the present circumstance, the first incline surface 24a inclines in an opposite direction to the second incline surface 24b, and vice versa, and the third incline surface 25a inclines in an opposite direction to the fourth incline surface 25b, and vice versa. In addition, the angle θ1 that is formed by the ridge line 24c that is located between the first incline surface 24a and the second incline surface 24b is greater than the angle 62 that is formed by the ridge line 25c that is located between the third incline surface 25a and the fourth incline surface 25b.

As a consequence thereof, each respective incline surface 24a, 24b, 25a, and 25b faces in a different direction, and a refractory index of a light that projects through each respective incline surface 24a, 24b, 25a, and 25b varies therewith.

As a result, a degree of illumination, put another way, a brightness, varies by each respective incline surface 24a, 24b, 25a, and 25b, allowing a fostering of a sense of solidity of the scale gauge unit 20, thereby facilitating an improvement of a visibility thereof.

In particular, the first protrusion part 23a and the second protrusion part 23b comprise a tapering shape. As a consequence thereof, the illumination that is incident within the scale gauge unit 20 is steadily attenuated, and a luminosity thereof reduced, as the illumination thereof is directed toward the ridge line 24c and the ridge line 25c that are the leading end portions of the first protrusion part 23a and the second protrusion part 23b.

A leading end portion of the scale gauge unit 20 darkens thereby, allowing the fostering of a greater sense of solidity of the scale gauge unit 20 than would be otherwise possible.

Furthermore, with respect to the scale gauge unit 20 in the present circumstance, the ridge line 25c of the second protrusion part 23b, which is located upon the exterior portion of the indicator dial panel 2, is taller than the ridge line 24c of the first protrusion part 23a, which is located upon the interior portion of the indicator dial panel 2, thereby allowing the fostering of an even greater sense of solidity of the scale gauge unit 20 than would be otherwise possible,

In addition, the indentation part 27 is formed within the interior surface 22 of the scale gauge unit 20 of the vehicle-mounted display apparatus 1. When forming the scale gauge unit 20, it is thereby possible to keep an occurrence of shrinkage thereof to a minimum, and thereby to keep an occurrence of a deformation of the scale gauge unit 20 under control as well. In addition, it is possible to reliably cause the light to project through to the exterior surface 21 of the scale gauge unit 20, by way of the indentation part 27, thereby facilitating enlarging an amount whereby the scale gauge unit 20 protrudes from the indicator dial panel 2, and further increasing a height of the scale gauge unit 20 as a result. It is thus possible to foster a greater sense of solidity thereof than would be otherwise possible.

In particular, in the present circumstance, the indentation part 27 comprises the incline surface 27a that faces the first protrusion part 23a and the second protrusion part 23b, and it is possible by way of the incline surface 27a thereof to effectively direct the light that is incident from the interior surface 22 of the scale gauge unit 20 toward the first incline surface 24a and the second incline surface 24b. It is thereby possible to further increase the luminosity of the scale gauge unit 20, and thus to foster an even greater sense of solidity thereof.

Furthermore, the lacquering process is carried out over an entire surface of the interior surface 22 of the scale gauge unit 20 with respect to the vehicte-mounted display apparatus 1. It is possible thereby to scatter the light that is incident from the interior surface 22 thereof into the interior of the scale gauge unit 20, thus allowing increasing the luminosity of the scale gauge unit 20 overall, and thereby facilitating the improvement of the visibility thereof.

While the embodiment according to the present invention has been described in detail herein with reference to the attached drawings, a concrete configuration thereof is not restricted to the embodiment described herein. It is to be understood that such as an alteration to a design that does not exceed the scope of the invention can be included within the invention.

As an instance thereof, while the scale gauge unit 20 comprises a pair of the first protrusion part 23a and the second protrusion part 23b according to the embodiment, the present invention is not limited thereto, and it would be permissible to form a plurality of the protrusion parts thereof. In such a circumstance, it is to be understood that the apex of each respective protrusion part thereof is formed so as to be aligned along the normal vector from the center of rotation O of the needle 3.

Given that the refractory index of the light becomes increasingly complex with a scale gauge unit that comprises the plurality of protrusion parts, an even greater sense of solidity thereof may thus be fostered than would be otherwise possible.

In addition, it would be permissible for a first protrusion part 31a to be practically level, such as per the scale gauge unit 30 that is depicted in FIGs.4A to 4C. In such a circumstance, both herein as well as according to the embodiment, an incline surface 31a of the first protrusion part 31a, and a first incline surface 32a and a second incline surface 32b of a second protrusion part 32 face in a different direction, respectively, and thus, the refractory index of the light that projects through each respective incline surface 31a, 32a, and 32b varies as well. It is thus possible to foster a sense of solidity of the scale gauge unit 30 thereof

Furthermore, according to the embodiment, the first protrusion part 23a and the second protrusion part 23b of the scale gauge unit 20 respectively comprise the ridge line 24c and the ridge line 25c, and each respective ridge line 24c and 25c thereof comprises an angular form. It would be permissible, however, for each respective apex, i.e., the ridge line 24c and 25c thereof, to protrude from the indicator dial panel 2, and to be curved in approximately an elliptical shape, as an instance thereof. In such a circumstance, it is to be understood that an incline surface thereof will be curved in a hemispherical shape. In such a circumstance, both herein as well as according to the embodiment, the refractory index of the light that projects through each of the plurality of protrusion parts varies, and it is thus possible to foster a sense of solidity of the scale gauge unit.

According to the present invention, a plurality of protrusion parts is formed upon an exterior surface of a scale gauge unit, wherein each respective protrusion part thereof comprises an incline surface that inclines with respect to an indicator dial panel, A refractory index of a light varies with the incline surface of each respective protrusion part thereof, and a brightness of the light thus varies with each respective surface thereof. It is thus possible to foster a sense of solidity of the scale gauge unit.

In addition, an indentation part is formed within an interior surface of the scale gauge unit, thereby facilitating keeping an occurrence of a shrinkage thereof to a minimum when forming the scale gauge unit, as well as facilitating enlarging an amount whereby the scale gauge unit protrudes from the indicator dial panel, and further increasing a height of the scale gauge unit as a result. It is thus possible to foster a greater sense of solidity thereof than would be otherwise possible.

In addition, a lacquering process is carried out over, for example, the interior surface of the scale gauge unit, and it is possible thereby to scatter a light, which is incident from both an obverse surface and a reverse surface of the lacquering thereof, respectively, in a direction of an exterior thereof, thus allowing increasing a luminosity of the scale gauge unit overall. Meanwhile, the lacquering process may be applied to a surface where the indentation part (27) is formed and an inner side surface about the surface where the indentation part is formed, of the inner side surface facing the indicator dial panel.

In addition, each respective apex of the plurality of protrusion parts of the scale gauge unit increases in height the further in a direction of the exterior of the indicator dial panel that the plurality of protrusion parts is located, thereby further fostering a greater sense of solidity thereof than would otherwise be possible.

Although the preferred embodiments of the present invention have been described, it should be understood that the present invention is not limited to these embodiments, various modifications and the changes can be made to the embodiments.

## Claims

1. A vehicle-mounted display apparatus, comprising;
an indicator dial panel (2); and
at least one scale gauge unit (20) configured to be positioned so as to protrude from a surface (2a) of the indicator dial panel along an outer peripheral edge of the indicator dial panel (2) and to have a light-transmitting property
wherein:
the scale gauge unit (20) includes a plurality of protrusion, parts (23a, 23b) formed on an incline surface configured to be inclined in an exterior direction of the indicator dial panel (2).

2. The vehicle-mounted display apparatus according to claim 1, wherein:
the plurality of protrusion parts (23a, 23b) are configured to increase in height, as going away from the indicator dial panel.

3. The vehicle-mounted display apparatus according to claim 1, wherein:
the scale gauge unit (20) includes an indentation part (27) provided in an inner side surface facing the indicator dial panel.

4. The vehicle-mounted display apparatus according to claim 3, wherein:
a lacquering process is applied to a surface where the indentation part (27) is formed and an inner side surface about the surface where the indentation part is formed, of the inner side surface facing the indicator dial panel,
